# EUROPÄISCHE PATENTSCHRIFT

(11) **EP 4 383 488 B1**
(45) Veröffentlichungstag und Bekanntmachung des Hinweises auf die Patenterteilung: **12.03.2025**
(21) Anmeldenummer: 24166612.2
(22) Anmeldetag: 10.08.2022
(51) Int. Cl.: F24D 3/14, F24D 13/02, B25B 9/00, H02G 1/06, H02G 3/36

(54) **VERLEGEVORRICHTUNG FÜR EIN HEIZKABEL EINES ELEKTRISCHEN FLÄCHENTEMPERIERSYSTEMS**
LAYING DEVICE FOR A HEATING CABLE OF A ELECTRICAL SURFACE TEMPERING SYSTEM
DISPOSITIF DE POSE POUR UN CÂBLE CHAUFFANT D'UN SYSTÈME ÉLECTRIQUE DE MISE EN TEMPÉRATURE DE SURFACE

(30) Priorität: 11.08.2021 DE 102021120939
(43) Veröffentlichungstag der Anmeldung: 12.06.2024
(62) Teilanmeldung aus: 22189630.1
(73) Patentinhaber: Infinex Holding GmbH, 72221 Haiterbach (DE)
(72) Erfinder: HARTL, Martin, 72160 Horb (DE); HIRMER, Thomas, 72221 Haiterbach (DE)
(74) Vertreter: Mammel und Maser Patentanwälte PartG mbB

(56) Entgegenhaltungen:
- EP-A2- 2 372 041
- DE-C1- 10 117 195
- DE-U1- 202005 015 259
- DE-U1- 202018 107 262
- DE-U1- 202019 104 864
- US-A1- 2011 101 291

## Beschreibung

Die Erfindung betrifft eine Verlegevorrichtung für ein Heizkabel des elektrischen Flächentemperiersystems.

Zur Flächentemperierung von einem Boden-, Wand- oder Deckenaufbau sind zwei voneinander abweichende Technologien bekannt. Zum einen wird eine solche Flächentemperierung aufgrund von in Rohren durchströmtem Wasser erzielt, die im Untergrund verlegt sind. Zum anderen werden Heizkabel bestromt, die auf dem Untergrund aufgebracht werden.

Elektrische Fußbodenheizungen sind allgemein bekannt. Diese bestehen aus sogenannten Wärmematten, wie diese beispielsweise unter www.fussbodenheizungdirekt.de/elektroheizung bekannt sind. Solche Wärmematten bestehen aus einer ausrollbaren Dünnschichtmatte, auf welcher Heizkabel für die elektrische Fußbodenheizung mäanderförmig auf der Dünnschichtmatte vorverlegt und befestigt sind. Solche Dünnschichtmatten mit vorverlegten Heizkabeln werden auf dem bestehenden Untergrund, wie beispielsweise Estrich, ausgerollt. Auf diese Dünnschichtmatte wird ein Kleber oder Mörtel aufgebracht, um diese mit dem Untergrund, insbesondere Estrich, zu verbinden und andererseits eine Boden-, Wand- oder Deckenverkleidung mit dem Untergrund, insbesondere Estrich, zu verbinden.

Solche Wärmematten zur Bildung einer elektrischen Fußbodenheizung ermöglichen eine geringe Flexibilität in der Anpassung an die Geometrie oder den Zuschnitt des Raumes, da die Dünnschichtmatte eine vorgegebene Bahnbreite aufweist. Zudem sollen die darauf vorverlegten Elektroheizleitungen nicht von der Dünnschichtmatte entfernt, durchtrennt oder anderweitig verlegt werden.

Aus der DE 20 2018 107 262 U1 ist ein Flächentemperiersystem bekannt, welches einen formstabilen, flächigen Träger umfasst, der als eine Hohlkammerplatte oder aus einer Polymerschaumstoff-Dämmschicht gebildet ist. Auf diesem Träger ist eine Trägerfolie mit einem zweiten Element aufgebracht, welches mit einem ersten Element, das um einen Heizdraht gewickelt ist, eine Klettverbindung bildet.

Aus der EP 2 372 041 A2 ist eine Trägerplatte sowie ein Verfahren zu deren Herstellung bekannt. Diese Trägerplatte umfasst eine folienartige Platte aus Kunststoff mit einer Vielzahl von Kammern, die durch Vertiefungen aus einer ebenen folienartigen Platte ausgebildet sind. Auf einer Außenseite der Platte ist eine erste Funktionsschicht auf Stirnseiten der Vertiefungen aufgebracht, welche die Vertiefungen überspannt. Auf der gegenüberliegenden Plattenseite ist eine weitere Funktionsschicht aufgebracht, welche die Oberseite sowie die Vertiefungen ausgekleidet.

Aus der US 2011/0101291 A1 ist eine Verlegevorrichtung zum Verlegen eines Heizkabels auf einer Trägerplatte bekannt. Das Heizkabels wird außerhalb einer Führungsstange einer Rolle zugeführt, durch welche das Heizkabel durch Verklipsen an der Trägerplatte befestigt wird. Die Verlegevorrichtung des Heizkabels ist durch die Ausrichtung der Verklipsung bestimmt.

Aus der DE 101 17 195 C1 ist des Weiteren eine Verlegevorrichtung zum Verlegen einer elektrisch betriebenen Flächenheizung bekannt. Diese Verlegevorrichtung nimmt eine erste Rolle auf, von welcher ein Heizdraht abgezogen und einer Andrückrolle zugeführt wird. Des Weiteren ist eine zweite Rolle vorgesehen, von welcher eine Wärmeleitfolie abgezogen wird, wobei die Wärmeleitfolie zwischen der Andrückrolle und dem Heizdraht hindurchgeführt wird, um den Heizdraht mittels der Wärmeleitfolie auf einem Untergrund zu fixieren.

Der Erfindung liegt die Aufgabe zugrunde, eine Verlegevorrichtung vorzuschlagen, durch welche ein Heizkabel des elektrischen Flächentemperiersystems in einfacher Weise in einem Raum zu verlegen ist.

Die der Erfindung zugrundeliegende Aufgabe wird durch eine Verlegevorrichtung für ein Heizkabel eines elektrischen Flächentemperiersystems, gelöst, wobei die Verlegevorrichtung einen Handgriff, eine Führungsstange, an welcher der Handgriff vorgesehen ist, und entfernt vom Handgriff eine an der Führungsstange angeordnete Laufrolle umfasst, sowie eine Kabelzuführung, durch welche ein Heizkabel, welches eine zweite Funktionsschicht, insbesondere in Form eines Hakenbandes, umfasst, der Rolle zuführbar ist und entlang einer Führung an oder in der Rolle während dem Aufbringen auf der Trägerplatte abrollt, sodass das Heizkabel mit der zweiten Funktionsschicht auf einer Trägerplatte auf der ersten Funktionsschicht vorgesehen ist, befestigbar ist. Diese Verlegevorrichtung ist sehr einfach im Aufbau und in der Handhabung.

Die Führungsstange weist bevorzugt eine Länge auf, sodass bei einer auf der Trägerplatte aufliegenden Rolle der an der Führungsstange angeordnete Handgriff in einer Höhe vorgesehen ist, damit ein Werker in einer aufrechten Position die Führungsstange mittels der Rolle auf der Trägerplatte führen und verfahren kann.

Die Führungsstange ist rohrförmig ausgebildet, wobei vorteilhafterweise die Kabelzuführung innerhalb der Führungsstange erfolgt. Die Führungsstange weist zumindest eine Führungslasche auf, durch welche das Heizkabel entlang der Führungsstange der Rolle zugeführt wird. Die Kabelzuführung erfolgt nur teilweise oder abschnittsweise innerhalb der Führungsstange.

Des Weiteren weist bevorzugt die Führungsstange an einem zur Rolle weisenden Ende einen kurvenförmigen Endabschnitt auf, der auf die Führung an oder in der Rolle zuweist. Dadurch kann das zugeführte Heizkabel vor dem Austritt aus der Kabelzuführung zwangsweise eine Krümmung erhalten, sodass eine vereinfachte Umlenkung an der Rolle ermöglicht wird.

Des Weiteren ist vorgesehen, dass die Führungsstange an einem zur Rolle weisenden Ende einen Führungsabschnitt für das Heizkabel aufweist, der durch zwei am Ende der Führungsstange ausgebildete Laschen ausgebildet ist, die sich vorzugsweise parallel zueinander erstrecken, wobei die Laschen die Rolle drehbar aufnehmen. Vorteilhafterweise ist die Länge der Laschen derart ausgebildet, dass eine Zwangsführung des Heizkabels auf die Führung der Rolle erfolgt.

Die Führung der Rolle ist bevorzugt durch eine umlaufende rillenförmige Vertiefung ausgebildet. Diese Vertiefung ist im Querschnitt gesehen halbkreisförmig oder als eine kreisförmige Vertiefung ausgebildet, sodass das Heizkabel darin anliegen kann und vorzugsweise seitlich geführt ist.

Die Laufrolle der Verlegevorrichtung weist bevorzugt einen Radius auf, der zumindest einem Abstand von zwei Vertiefungen in einer Trägerplatte entspricht. Dadurch kann ein sicheres und gleichmäßiges Abrollen auf einer Trägerplatte ermöglicht sein, welche Kammern umfasst, die durch Vertiefungen ausgebildet sind. Dadurch kann das Heizkabel auch Vertiefungen in der Trägerplatte überspannend verlegt werden.

Eine weitere vorteilhafte Ausgestaltung der Verlegevorrichtung sieht vor, dass benachbart zur Rolle an der Führungsstange ein Standfuß vorgesehen ist. Dieser Standfuß ist beispielsweise in Form einer Platte ausgebildet. Dadurch kann ein selbständiges Halten der Verlegevorrichtung bei Nichtgebrauch in einer stehenden Position ermöglicht sein.

Des Weiteren ist bevorzugt vorgesehen, dass eine Haspel zur Abgabe des Heizkabels an der Führungsstange drehbar und vorzugsweise auswechselbar vorgesehen ist. Diese Anordnung weist den Vorteil auf, dass eine handhabbare Einheit gegeben ist. Die Haspel kann ohne zusätzliche Handhabung gleichzeitig mit der Führungsstange während dem Verlegen des Heizkabels mitgeführt werden.

Des Weiteren ist bevorzugt vorgesehen, dass an der Führungsstange rechtwinklig zu deren Längsachse eine Steckachse befestigt ist, auf welche die Haspel aufsteckbar und vorzugsweise mit einem an der Drehachse befestigbaren Sicherungselements gehalten ist. Vorteilhafterweise ist während der Handhabung der Verlegevorrichtung die Haspel oberhalb der Führungsstange zugeordnet, so dass diese auf der Führungsstange aufliegt. Zur auswechselbaren Anordnung der Haspel ist bevorzugt ein Sicherungssplint oder dergleichen als Sicherungselement gegeben.

Das von der Haspel abgezogene Heizkabel wird bevorzugt durch eine Zuführöffnung in der Führungsstange der Kabelführung zugeführt und im Endbereich der Führungsstange zwischen den Laschen herausgeführt. Diese Anordnung weist den Vorteil auf, dass durch die abschnittsweise Führung des Heizkabels in der Kabelführung der Führungsstange am Ende der Führungsstange eine Zwangsführung des Heizkabels durch die Laschen ermöglicht wird, so dass das Heizkabel sicher, und zu der Führung der Rolle ausgerichtet, zugeführt werden kann. Gleichzeitig kann dadurch ein Zug zwischen der Rolle und der Haspel auf das Heizkabel aufgebracht werden, so dass gleichbleibende Bedingungen für ein sicheres Abrollen des Heizkabels durch die Rolle zum Fixieren auf der Trägerplatte ermöglicht werden.

Die Führungsstange kann am griffseitigen Ende des Handgriffs vorzugsweise eine Einführhilfe aufweisen. Dies kann eine gekrümmte muldenförmige Fläche sein, die ermöglicht, dass durch das Heizkabel, welches beispielsweise von einer Rolle abgewickelt wird, ein großer Krümmungsradius gebildet wird, bevor das Heizkabel der Kabelzuführung an oder in der Führungsstange zugeführt wird. Dies erleichtert die Handhabung und die Verlegung des Heizkabels.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Darstellung eines elektrischen Flächentemperiersystems,
- Figur 2: eine schematische Schnittansicht des elektrischen Flächentemperiersystems in einer Einbausituation,
- Figur 3: eine schematische Schnittansicht einer alternativen Ausführungsform des elektrischen Flächentemperiersystems in einer Einbausituation,
- Figur 4: eine perspektivische Ansicht einer alternativen Ausführungsform eines Heizkabels,
- Figur 5: eine perspektivische Ansicht einer erfindungsgemäßen Verlegevorrichtung,
- Figur 6: eine schematische Ansicht von vorne auf die Verlegevorrichtung gemäß Figur 4,
- Figur 7: eine schematische Seitenansicht der Verlegevorrichtung im Gebrauch,
- Figur 8: eine schematische Ansicht auf eine alternative Ausführungsform der Verlegevorrichtung gemäß Figur 5, und
- Figur 9: eine schematische Seitenansicht der Verlegevorrichtung gemäß Figur 8 im Gebrauch.

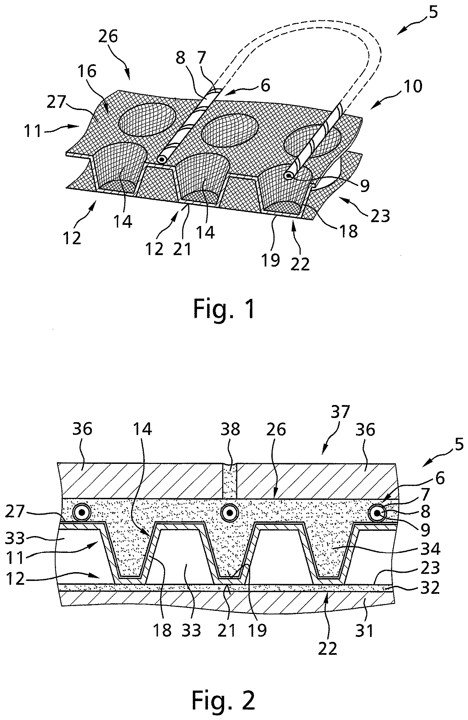

In Figur 1 ist perspektivisch ein elektrisches Flächentemperiersystem 5 dargestellt. Dieses elektrische Flächentemperiersystem 5 umfasst zumindest eine Trägerplatte 10 und zumindest ein Heizkabel 6. Des Weiteren umfasst das elektrische Flächentemperiersystem 5 eine Steuerung und/oder ein Thermostat, um das Heizkabel zu betreiben. Dies ist nicht näher dargestellt.

Diese Trägerplatte 10 umfasst eine folienartige Platte 11 aus Kunststoff, welche eine Vielzahl von Kammern 12 aufweist, die durch Vertiefungen 14 in der folienartigen Platte 11 gebildet sind. Die bevorzugt einseitig ausgerichteten Vertiefungen 14 der Kammern 12 weisen eine vorzugsweise sich wiederholende Anordnung in Zeilen und Spalten oder festgelegte anderweitige Muster zueinander auf. Zwischen den Vertiefungen 14 sind Flächenabschnitte 16 ausgebildet, welche die Kammern 12 miteinander verbinden. Ausgehend von diesen Flächenabschnitten 16 erstrecken sich gemäß der ersten Ausführungsform konisch sich verjüngende Wandabschnitte 18, welche in einen Boden 19 übergehen, die mit einer außenliegenden Stirnseite 21 eine erste Plattenseite 22 bilden. An den Stirnseiten 21 der Kammern 12 ist ein Gewebe oder Vlies 23 auflaminiert oder aufgeschweißt, welche zur Klammerung der Trägerplatte 10 in einer auf einem Untergrund aufgebrachten Kontaktschicht, wie beispielsweise einem Klebemittel oder einem Mörtel, dient. Das Gewebe oder Vlies 23 ist bevorzugt als netzartiges Gewebe, insbesondere als feinmaschiges Gittergewebe oder als perforiertes Vlies, ausgebildet. Ein solches Gewebe kann beispielsweise aus Polypropylen ausgebildet sein.

Der ersten Plattenseite 22 gegenüberliegend ist eine zweite Plattenseite 26 vorgesehen, welche durch die die Kammern 12 verbindenden Flächenabschnitte 16 und die Vertiefungen 14 gebildet ist. Auf dieser Plattenseite 26 ist eine erste Funktionsschicht 27 aus einem bahnförmigen Material aufgebracht, welche zumindest eine Innenseite der Vertiefungen 14 auskleidet und mit dieser Innenseite verbunden ist. Bevorzugt ist diese erste Funktionsschicht 27 auch mit den Flächenabschnitten 16 verbunden. Bevorzugt ist die zweite Funktionsschicht 27 vollflächig auf der zweiten Plattenseite 26 aufgebracht. Bevorzugt ist die erste Funktionsschicht 27 auf die folienartige Platte aufgeschweißt oder auflaminiert. In einigen Fällen kann auch ein Aufpressen oder Aufkleben vorgesehen sein. Somit umfasst die erste Funktionsschicht 27 dieselbe Kontur wie die zweite Plattenseite 26 der Trägerplatte 10. Die erste Funktionsschicht 27 aus einem bahnförmigen Material ist gemäß einer ersten bevorzugten Ausführungsform aus einer faserigen Schicht, einem feinmaschigen Gewebe, einem Gittergewebe oder Vlies, das auch perforiert sein kann, ausgebildet. Bei der ersten Funktionsschicht 27 handelt es sich bevorzugt um ein Vlies, welches beispielsweise aus Polyethylen oder Polypropylen besteht. Ebenso kann die erste Funktionsschicht 27 haftverstärkende Komponenten aufweisen. Diese können beispielsweise in Form von Glasfasern oder Granulat ausgebildet sein, die aus der Oberfläche der ersten Funktionsschicht 27 zumindest teilweise herausragen.

Das Heizkabel 6 besteht aus einem Heizleiter 9, beispielsweise aus Kupfer, und einer Ummantelung 8, die eine Isolierung bildet. Die Ummantelung 8 kann aus einem polymeren Material bestehen. Am Außenumfang des Heizkabels 6 ist eine zweite Funktionsschicht 7 vorgesehen. Diese zweite Funktionsschicht 7 kann ein band- oder streifenförmiges Material sein, welches auf einer Außenseite als Hakenband ausgebildet ist und auf einer Innenseite eine Auflagefläche zum Verbinden mit der Ummantelung 9 umfasst. Diese zweite Funktionsschicht 7 kann an der Ummantelung 9 durch eine Klebeverbindung gehalten sein. Bevorzugt ist an der Funktionsschicht 7 dem Hakenband gegenüberliegend eine Klebeschicht oder ein doppelseitiges Klebeband aufgebracht. Alternativ kann die Ummantelung 8 des Heizkabels 6 eine Oberfläche aufweisen, die einem Hakenband entspricht. Des Weiteren kann alternativ anstelle einer wendelförmigen oder spiralförmigen Umschlingung des Heizkabels 6 die als Band oder Streifen ausgebildete zweite Funktionsschicht 7 auch nur längs entlang des Heizkabels 6 angebracht sein. Dabei kann die Funktionsschicht 7 die Ummantelung 8 teilweise, beispielsweise um 60°, 90°, 180° oder dergleichen, oder vollständig umgeben. Auch können zwei oder mehrere Längsstreifen, die schmaler als ein Außendurchmesser der Ummantelung 8 sind, parallel zueinander an der Ummantelung 8 vorgesehen sein. Diese Längsstreifen können parallel zur Längsachse des Heizkabels 6 oder spiralförmig umlaufend an dem Heizkabel 6 vorgesehen sein.

Die Verlegung des Heizkabels 6 kann sowohl entlang den Flächenabschnitten 16 und/oder die Vertiefungen 14 der Trägerplatte 10 überspannend erfolgen. Die Bildung eines Klettverschlusses an den Flächenabschnitten 16 vor und hinter der Vertiefung 14 genügt zur Fixierung des Heizkabels 6 auf der Trägerplatte 10.

In Figur 2 ist eine schematische Seitenansicht der erfindungsgemäßen Trägerplatte 10 in einer Einbausituation dargestellt. Auf einem Untergrund 31, insbesondere Estrich, wird ein Kleber oder Mörtel 32 aufgebracht. Im Anschluss daran wird die folienartige Platte 11 mit dem Gewebe oder Vlies 23 auf dem Untergrund 31 ausgelegt. Der Mörtel 32 verklammert sich in dem Gewebe oder Vlies 23. Die Maschengröße des Gewebes oder Vlieses 23 beziehungsweise deren Perforation, sofern vorgesehen, ist derart ausgebildet, dass beim Auslegen der Trägerplatte 10 ein Eindringen des Mörtels in Bereiche 33, also zwischen den Kammern 12 gebildeten Freiräumen, nicht erfolgt, jedoch eine Verklammerung mit dem Gewebe oder Vlies 23. Dadurch kann eine Luftzirkulation in diesen Freiräumen erfolgen.

Anschließend wird ein Kleber oder Mörtel 34 auf die zweite Plattenseite 26 aufgetragen. Dieser Mörtel oder Kleber 34 kann von dem auf dem Untergrund 31 aufgebrachten Kleber 32 auch abweichen. Der Mörtel oder Kleber 34 wird dabei auf die Flächenabschnitte 16 aufgetragen, die Kammern 12 werden befüllt, und das oder die Heizkabel 6 werden von Mörtel oder Kleber 34 umgeben, sodass bevorzugt eine ebene und durchgehende Auflagefläche durch den Mörtel oder Kleber 32 ausgebildet ist, um eine Flächenbekleidung 37 bestehend aus einzelnen Fliesen oder Platten 36 aufzunehmen und zu fixieren. Während dem Befüllen der Kammern 12 und dem Aufstreichen des Mörtels oder Klebers 34 auf die Flächenabschnitte 16 erfolgt aufgrund der ersten Funktionsschicht 27 ein Verhaken des Klebers oder Mörtels 34 mit dieser ersten Funktionsschicht 27. Die verlegte Position des Heizkabels 6 auf der Trägerplatte 10 bleibt durch den gebildeten Klettverschluss zwischen der ersten Funktionsschicht 27 an der Trägerplatte 10 und der zweiten Funktionsschicht 7 an dem Heizkabel aufrechterhalten. Gleichzeitig können in den Vertiefungen 14 sogenannte Mörtelstelzen ausgebildet werden, über welche ein Lastabtrag auf den Untergrund 31 erfolgt. Nach dem Aufbringen der Platten 36 zur Bildung einer Flächenbekleidung 37 und dem Aushärten des Klebers oder Mörtels 34 werden Fugen 38 zur Fertigstellung der Flächenbekleidung 37 eingebracht.

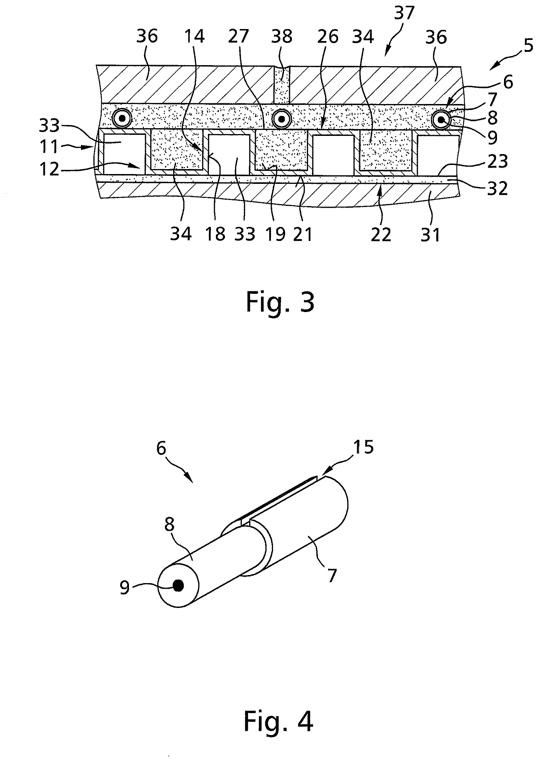

In Figur 3 ist eine alternative Ausführungsform der erfindungsgemäßen Trägerplatte 10 in einer Einbausituation dargestellt. Die folienartige Platte 11 weicht von der Ausführungsform in Figur 1 dahingehend ab, dass die Kammern 12 einen senkrecht stehenden Wandabschnitt 18 aufweisen und somit zylindrische Vertiefungen 14 bilden. Im Übrigen entspricht diese Ausführungsform der Ausführungsform gemäß den Figuren 1 und 2 und weist dieselben Vorteile auf.

Alternativ zur Ausgestaltung der Trägerplatte 10 gemäß Figur 1 kann vorgesehen die Trägerplatte 10 als eine folienartige Platte aus Kunststoff ausgebildet sein, welche eben ist. Diese alternative Ausführungsform der Trägerplatte ist somit frei von Erhöhungen und/oder Vertiefungen 14. Diese Trägerplatte 10 kann auf der zweiten Plattenseite 26 die erste Funktionsschicht 27 aufweisen. Je nach Einbausituation kann die erste Plattenseite 27 mit einer dritten Funktionsschicht 23, insbesondere einem netzartigen Gewebe, versehen sein oder auch frei von einer dritten Funktionsschicht verbleiben.

Die in den Figuren 1 bis 3 dargestellte Trägerplatte mit den Vertiefungen 14 weist des Weiteren den Vorteil auf, dass eine Entkopplung zwischen der Flächenbekleidung 37 und dem Untergrund 31 beziehungsweise dem Estrichboden ermöglicht ist.

In Figur 4 ist perspektivisch eine alternative Ausgestaltung des Heizkabels 6 dargestellt. Der Aufbau des Heizkabels 6 bezogen auf den Heizleiter 9 und die Ummantelung 8 entspricht der vorbeschriebenen Ausführungsform. Bei dieser Ausführungsform ist vorgesehen, dass die Funktionsschicht 7 als ein Längsstreifen ausgebildet ist, dessen Breite einem Außenumfang der Ummantelung 8 entspricht. Diese zweite Funktionsschicht 7 umgibt vollständig die Ummantelung 8, so dass längs der Längsachse des Heizkabels 6 ein verlaufender Stoß 15 durch die beiden Längsseiten der als Längsstreifen ausgebildeten zweiten Funktionsschicht 7 gebildet ist. Dies weist den Vorteil auf, dass gegenüber der spiral- oder wendelförmigen Anordnung der zweiten Funktionsschicht 7 beim Aufbringen auf das Trägerelement 10 gemäß den Ausführungsformen in Figur 1 bis 3 eine verbesserte Haftung gegeben ist. Diese vollständige Ummantelung 8 des Heizkabels 6 durch die zweite Funktionsschicht 7 beeinträchtigt die Verlegerichtung oder die Verlegeart des Heizkabels 6, welche vorzugsweise mäanderförmig erfolgt, nicht.

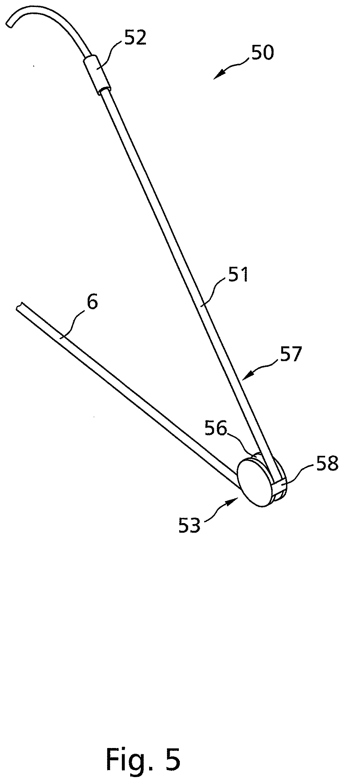

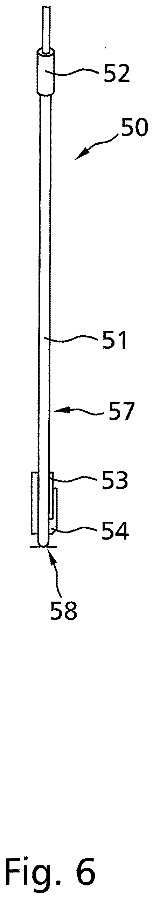

In Figur 5 ist eine perspektivische Ansicht einer Verlegevorrichtung 50 für das Heizkabel 6 des elektrischen Flächentemperiersystems 5 dargestellt. Figur 6 zeigt eine Ansicht von oben auf die Verlegevorrichtung 50 gemäß Figur 5. Die Verlegevorrichtung 50 umfasst eine Führungsstange 51. An einem Ende der Führungsstange 51 ist ein Handgriff 52 vorgesehen. Am gegenüberliegenden Ende der Führungsstange 51 ist eine Rolle 53 angeordnet. Diese Rolle 53 kann durch eine einachsige Halterung 54 drehbar aufgenommen werden, wobei die Halterung 54 an der Führungsstange 51 befestigt ist. Die Rolle 53 weist bevorzugt eine Führung 56 auf. Diese Führung 56 kann als eine umlaufende rillenförmige Nut ausgebildet sein. Diese Führung 56 ist vorzugsweise im Querschnitt gesehen bogensegmentförmig oder halbkreisförmig ausgebildet. Die Größe der Führung 56 ist an den Außendurchmesser der Heizkabel 6 angepasst, sodass während dem Abrollen des Heizkabels 6 an der Rolle 53 ein seitlicher Halt des Heizkabels 6 durch die Rolle 53 gegeben ist.

In der Führungsstange 51 oder der Halterung 54 kann ein Standfuß 58, beispielsweise in Form einer Platte, vorgesehen sein. Dadurch kann die Verlegevorrichtung eine aufrechte Standposition im Nichtgebrauch einnehmen.

Die Führungsstange 51 ist bevorzugt als Rohr ausgebildet. Somit kann eine Kabelzuführung 57 innerhalb der Führungsstange 51 ermöglicht sein. Das Heizkabel 6 wird beispielsweise am Handgriff 52 in die Führungsstange 51 eingeführt und tritt am Ende der Führungsstange 51 benachbart zur Rolle 53 aus. Vorteilhafterweise kann am Handgriff 52 entgegengesetzt zur Führungsstange 51 ausgerichtet noch eine Einführhilfe für das Heizkabel 6 vorgesehen sein.

Am stirnseitigen Ende der Führungsstange 51, welches zur Rolle 53 ausgerichtet ist, weist die Führungsstange 51 bevorzugt einen gekrümmten Bereich auf. Die Krümmung ist bevorzugt an den Radius der Rolle 53 angepasst.

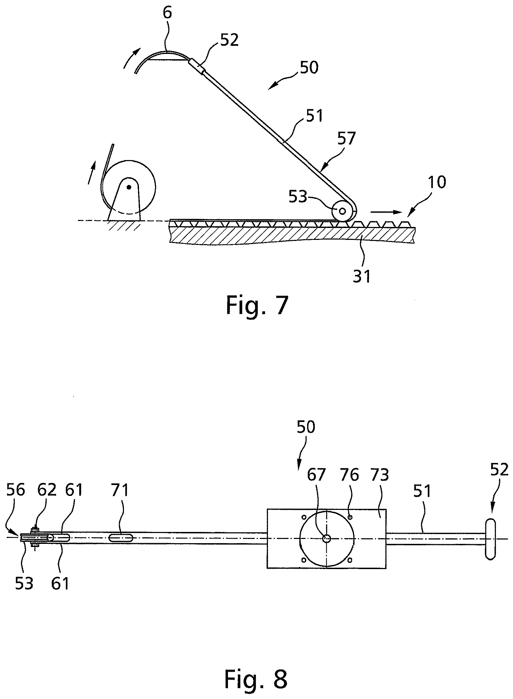

Durch die Verlegevorrichtung 50 ist eine einfache Verlegung des Heizkabels 6 auf der Trägerplatte 10 ermöglicht. Dies ist beispielsweise in Figur 7 dargestellt. Das Heizkabel 6 ist bevorzugt auf einer Kabeltrommel aufgewickelt. Dadurch kann das Abrollen und Verlegen erleichtert werden. Die Kabeltrommel kann entfernt auf dem Boden stehen oder beispielsweise von einem Werker mitgeführt werden, beispielsweise in Form eines Rucksacks. Ein erstes Kabelende wird durch die Führungsstange 51 hindurchgeführt und um die Rolle 53 gelegt sowie auf der Trägerplatte 10 befestigt. Dabei wird zwischen der zweiten Funktionsschicht 27 auf der Trägerplatte 10 und der ersten Funktionsschicht 7 am Heizkabel 6 eine Klettverschlussverbindung geschaffen. Darauffolgend kann die Verlegevorrichtung 50 mittels dem Handgriff 52 verfahren werden, wobei die Rolle 53 auf der Trägerplatte 10 abrollt und das Heizkabel 6 in der Position zur Trägerplatte 10 fortwährend unter Bildung von Klettverschlüssen befestigbar ist. Der Verlauf des Heizkabels 6 auf der Trägerplatte 10 innerhalb des Raumes kann beliebig bestimmt oder an den Zuschnitt und/oder an weitere Gegebenheiten angepasst werden. Nach dem Verlegen des zumindest einen Heizkabels 6 auf der oder den Trägerplatten 10 werden die beiden Enden des jeweiligen Heizkabel 56 an die Steuerung angeschlossen und mit dieser verbunden, beispielsweise für einen Funktionstest. Darauffolgend kann die Verlegung der Flächenbekleidung 37 - also das Aufbringen des Mörtels 34 und der Platten 36 - erfolgen.

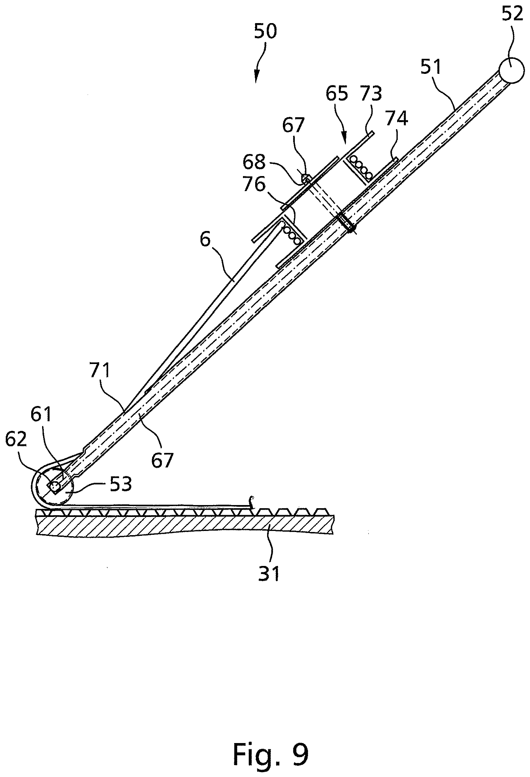

In Figur 8 ist eine schematische Ansicht auf eine alternative Ausführungsform der Verlegevorrichtung 50 dargestellt. Die Figur 9 zeigt die Verlegevorrichtung 50 gemäß Figur 8 in einer Gebrauchsposition zum Verlegen des Heizkabels 6.

Die Verlegevorrichtung 50 umfasst eine Führungsstange 51, die vorzugsweise rohrförmig ausgebildet ist. Am oberen Ende der Führungsstange 51 ist der Handgriff 52 vorgesehen. Gegenüberliegend am anderen Ende der Führungsstange 51 ist eine Rolle 53 aufgenommen. Bei dieser Ausführungsform ist vorgesehen, dass das die Rolle 53 aufnehmende Ende der Führungsstange 51 durch zwei parallel zueinander ausgerichtete Laschen 61 gebildet ist, welche eine Drehachse 62 zur Lagerung der Rolle 53 aufnehmen. An der Führungsstange 51 ist bevorzugt eine Haspel 65 drehbar gelagert. Diese Haspel 65 ist vorzugsweise auswechselbar zur Führungsstange 51, insbesondere durch die Steckachse 67, gelagert. Diese Steckachse 67 ist an der Führungsstange 51 befestigt. Vorzugsweise ist die Steckachse 67 rechtwinklig zur Längsachse der Führungsstange 51 ausgerichtet. Auf diese Steckachse 67 kann die Haspel 65 auswechselbar aufgesteckt werden. Bevorzugt ist ein Sicherungselement 68, wie beispielsweise ein Sicherungssplint, vorgesehen, um die Haspel 65 zu der Steckachse 67 zu sichern. Die Haspel 65 ist vorzugsweise in einer oberen Hälfte der Führungsstange 51 angeordnet. Vorzugsweise ist die Haspel 65 in einem Bereich innerhalb einer halben Länge der Führungsstange 51 ausgehend von dem Handgriff 52 angeordnet. Im Ausführungsbeispiel ist die Haspel 65 auf der Führungsstange 51 oben aufliegend gelagert. Alternativ kann die Haspel 65 auch auf der Unterseite hängend an der Führungsstange 51 gelagert sein.

Das zu verlegende Heizkabel 6 wird von der Haspel 65 abgezogen und einer Zuführöffnung 71 in der Führungsstange 51 zugeführt. Diese Zuführöffnung 71 kann in Form eines Langloches ausgebildet sein. Darauffolgend wird das Heizkabel 6 in der Kabelzuführung 57 bis zu den Laschen 61 in der Führungsstange 51 geführt. Anschließend wird das Heizkabel 6 durch die Laschen 61 geführt und der Führung 56 an der Rolle 53 zugeführt. Vorzugsweise ist das Heizkabel 6 nur in einem der Rolle 53 zugeordneten Endbereich in der Kabelzuführung 57 geführt.

Alternativ kann vorgesehen sein, dass anstelle der vorbeschriebenen innenliegenden Führung des Heizkabels 6 im unteren Bereich der Führungsstange 51 außen an der Führungsstange 51 angebrachte Haltelaschen vorgesehen sind. Die Haltelaschen können ring- oder U-förmig ausgebildet sein, um das Heizkabel 6 zwischen der Haltelasche und der Führungsstange 51 oder nur in der Haltelasche zu führen.

Die Haspel 65 kann, wie dies in den Figuren 8 und 9 dargestellt ist, einen H-förmigen Querschnitt aufweisen. Diese umfasst eine obere und untere Abdeckplatte 73, 74 sowie dazwischen angeordnete Stifte 56, um das Heizkabel 6 kreisförmig aufgewickelt aufzunehmen. Alternativ können auch anderweitig aufgebaute Haspeln vorgesehen sein.

## Patentansprüche

1. Verlegevorrichtung für ein Heizkabel (6) eines elektrischen Flächentemperiersystems (5),
- mit einem Handgriff (52),
- mit einer Führungsstange (51), an deren einen Ende der Handgriff (52) und entfernt dazu an der Führungsstange (51) eine Rolle (53) vorgesehen ist,
- mit einer Kabelzuführung (57), durch welche das mit einer zweiten Funktionsschicht (7) versehene Heizkabel (6) der Rolle (53) zuführbar ist und entlang einer Führung (56) an der Rolle (53) abrollbar und auf einer Trägerplatte (10) befestigbar ist, welche auf einer zweiten Plattenseite (26) eine erste Funktionsschicht (27) aus einer faserigen Schicht aufweist,
**dadurch gekennzeichnet,**
- **dass** die Führungsstange (51) rohrförmig ausgebildet ist und die Kabelzuführung (57) zumindest teilweise in der Führungsstange (51) vorgesehen ist.

2. Verlegevorrichtung nach Anspruch 1, **dadurch gekennzeichnet, dass** die Führungsstange (51) rohrförmig ausgebildet ist und die Kabelzuführung (57) vollständig in der Führungsstange (51) vorgesehen ist und/oder dass die Kabelzuführung (57) durch zumindest eine Führungslasche ausgebildet ist, die an der Führungsstange (51) ausgebildet oder angeordnet ist.

3. Verlegevorrichtung nach Anspruch 1 oder 2, **dadurch gekennzeichnet, dass** die Führungsstange (51) am zur Rolle (53) weisenden Ende einen Führungssabschnitt für das Heizkabel (6) aufweist, der durch zwei am Ende der Führungsstange (51) ausgebildete Laschen (61) ausgebildet ist, welche vorzugsweise die Rolle (53) drehbar aufnehmen oder der einen kurvenförmigen Endabschnitt aufweist, der auf die Führung (56) der Rolle (53) zuweist.

4. Vorrichtung nach einem der Ansprüche 1 bis 3, **dadurch gekennzeichnet, dass** die Rolle (53) einen Radius aufweist, der zumindest größer als der Abstand zwischen zwei Vertiefungen (14) in der Trägerplatte (10) ist.

5. Verlegevorrichtung nach einem der Ansprüche 1 bis 4, **dadurch gekennzeichnet, dass** eine Haspel (65) zur Abgabe des Heizkabels (6) an der Führungsstange (51) drehbar und vorzugsweise auswechselbar vorgesehen ist.

6. Verlegevorrichtung nach Anspruch 5, **dadurch gekennzeichnet, dass** an der Führungsstange (61) rechtwinklig zu deren Längsachse eine Steckachse (67) vorgesehen ist, auf welche die Haspel (65) positionierbar ist und vorzugsweise mit einem Sicherungselement (68) gehalten ist.

7. Verlegevorrichtung nach Anspruch 5 oder 6, **dadurch gekennzeichnet, dass** das von der Haspel (65) abgezogene Heizkabel (6) durch eine Zuführöffnung (71) in der Führungsstange (51) der Kabelführung (57) zuführbar ist und im Endbereich der Führungsstange (51) durch die Laschen (61) geführt der Rolle (53) zuführbar ist.

## Claims

1. Laying device for a heating cable (6) of an electric surface temperature control system (5),
- with a handle (52),
- with a guide rod (51), at one end of which the handle (52) is provided and, remote therefrom, a roller (53) is provided on the guide rod (51),
- with a cable feed (57), through which the heating cable (6) provided with a second functional layer (7) can be fed to the reel (53) and is unrollable along a guide (56) on the reel (53) and fixed on a carrier plate (10), which has a first functional layer (27) consisting of a fibrous layer on a second plate side (26),
**characterized in that**
- the guide rod (51) is tubular and the cable feed (57) is provided at least partially in the guide rod (51).

2. Laying device according to claim 1, **characterized in that** the guide rod (51) is tubular and the cable feed (57) is provided completely in the guide rod (51) and/or **in that** the cable feed (57) is formed by at least one guide lug which is formed or arranged on the guide rod (51).

3. Laying device according to claim 1 or 2, **characterized in that** the guide rod (51) has at the end facing the roller (53) a guide section for the heating cable (6), which is formed by two tabs (61) formed at the end of the guide rod (51), which preferably rotatably accommodate the roller (53) or which has a curved end section which points towards the guide (56) of the roller (53).

4. Device according to one of claims 1 to 3, **characterized in that** the roller (53) has a radius which is at least greater than the distance between two recesses (14) in the carrier plate (10).

5. Laying device according to one of claims 1 to 4, **characterized in that** a reel (65) for delivering the heating cable (6) is provided on the guide rod (51) in a rotatable and preferably exchangeable manner.

6. Laying device according to claim 5, **characterized in that** a plug-in axle (67) is provided on the guide rod (61) at right angles to its longitudinal axis, on which the reel (65) is positionable and is preferably held by a securing element (68).

7. Laying device according to claim 5 or 6, **characterized in that** the heating cable (6) drawn off from the reel (65) is feedable to the cable guide (57) through a feed opening (71) in the guide rod (51) and is feedable to the roller (53) in the end region of the guide rod (51), guided by the tabs (61).

## Revendications

1. Dispositif de pose pour un câble chauffant (6) d'un système électrique de thermorégulation de surface (5),
- avec une poignée (52),
- avec une tige de guidage (51), à l'une des extrémités de laquelle est prévue la poignée (52) et, à distance de celle-ci, sur la barre de guidage (51), un galet (53),
- avec une amenée de câble (57), par laquelle le câble chauffant (6) pourvu d'une deuxième couche fonctionnelle (7) peut être amené à le galet (53) et peut être déroulé le long d'un guidage (56) sur le galet (53) et fixé sur une plaque de support (10), qui présente sur un deuxième côté de plaque (26) une première couche fonctionnelle (27) constituée d'une couche fibreuse,
**caractérisé en ce que**
- **en ce que** la tige de guidage (51) est de forme tubulaire et **en ce que** l'amenée de câble (57) est prévue au moins partiellement dans la tige de guidage (51).

2. Dispositif de pose selon la revendication 1, **caractérisé en ce que** la tige de guidage (51) est de forme tubulaire et **en ce que** l'amenée de câble (57) est entièrement prévue dans la tige de guidage (51) et/ou **en ce que** l'amenée de câble (57) est formée par au moins une patte de guidage qui est formée ou disposée sur la tige de guidage (51).

3. Dispositif de pose selon la revendication 1 ou 2, **caractérisé en ce que** la tige de guidage (51) présente, à l'extrémité tournée vers le galet (53), une section de guidage pour le câble chauffant (6), qui est formée par deux pattes (61) formées à l'extrémité de la barre de guidage (51), qui reçoivent de préférence le galet (53) de manière à pouvoir tourner, ou qui présente une section d'extrémité en forme de courbe, qui est dirigée vers le guidage (56) du galet (53).

4. Dispositif selon l'une des revendications 1 à 3, **caractérisé en ce que** le galet (53) présente un rayon au moins supérieur à la distance entre deux cavités (14) dans la plaque support (10).

5. Dispositif de pose selon l'une des revendications 1 à 4, **caractérisé en ce qu'**un dévidoir (65) est prévu pour délivrer le câble chauffant (6) sur la tige de guidage (51) de manière rotative et de préférence interchangeable.

6. Dispositif de pose selon la revendication 5, **caractérisé en ce qu'**il est prévu sur la barre de guidage (61), perpendiculairement à son axe longitudinal, un axe d'enfichage (67) sur lequel le dévidoir (65) peut être positionné et est de préférence maintenu par un élément de sécurité (68).

7. Dispositif de pose selon la revendication 5 ou 6, **caractérisé en ce que** le câble chauffant (6) déroulé du dévidoir (65) peut être amené au guide-câble (57) par une ouverture d'amenée (71) dans la barre de guidage (51) et peut être amené au galet (53) en étant guidé par les languettes (61) dans la zone d'extrémité de la barre de guidage (51).
